(19) Europäisches Patentamt
European Patent Office
Office européen des brevets

(11) **EP 3 671 266 B1**

(12) **FASCICULE DE BREVET EUROPEEN**

(45) Date de publication et mention
de la délivrance du brevet:
**29.06.2022   Bulletin 2022/26**

(21) Numéro de dépôt: **19210521.1**

(22) Date de dépôt: **21.11.2019**

(51) Classification Internationale des Brevets (IPC):
**G01S 13/34** $^{(2006.01)}$      **G01S 13/60** $^{(2006.01)}$

(52) Classification Coopérative des Brevets (CPC):
**G01S 13/345; G01S 13/60;** G01S 7/356

(54) **PROCEDE DE MESURE DE DISTANCE PAR TRANSFORMEE DE FOURIER ADAPTEE ET SYSTEME RADAR POUR LA MISE EN OEUVRE DU PROCEDE**

VERFAHREN ZUR ENTFERNUNGSMESSUNG MIT ANGEPASSTER FOURIER-TRANSFORMATION, UND RADARSYSTEM ZUR UMSETZUNG DIESES VERFAHRENS

METHOD FOR MEASURING DISTANCE BY ADAPTED FOURIER TRANSFORM AND RADAR SYSTEM FOR IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **20.12.2018   FR 1873303**

(43) Date de publication de la demande:
**24.06.2020   Bulletin 2020/26**

(73) Titulaire: **Thales**
**92400 Courbevoie (FR)**

(72) Inventeurs:
 • **MAZEAU, Thierry**
   **33701 MERIGNAC CEDEX (FR)**
 • **GARREC, Patrick**
   **33701 MERIGNAC CEDEX (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 605 037**

 • **TENEIJI AAMNA AL ET AL: "Improving the Detection Accuracy of Frequency Modulated Continuous Wave Radar",** 2018 INTERNATIONAL CONFERENCE ON SIGNAL PROCESSING AND INFORMATION SECURITY (ICSPIS), IEEE, 7 novembre 2018 (2018-11-07), pages 1-4, XP033518695, DOI: 10.1109/CSPIS?.2018.8642764
 • **PENG-CHENG GONG ET AL: "A high resolution algorithm based on Chirp Z-transform for FMCW radar",** 2015 IEEE INTERNATIONAL CONFERENCE ON COMMUNICATION PROBLEM-SOLVING (ICCP), IEEE, 16 octobre 2015 (2015-10-16), pages 482-484, XP032892573, DOI: 10.1109/ICCPS.2015.7454209 ISBN: 978-1-4673-6543-7 [extrait le 2016-04-15]
 • **HAIXIN ZHAO: "A CZT-Linear Fitting Algorithm for Improving Ranging Precision of LFMCW Radar",** TENCON 2018 - 2018 IEEE REGION 10 CONFERENCE, IEEE, 28 octobre 2018 (2018-10-28), pages 1456-1459, XP033522775, DOI: 10.1109/TENCON.2018.8650422

**Description**

[L'invention se rapporte au domaine général des systèmes aéroportés, des hélicoptères ou des aéronefs avec (avions) ou sans (drones) pilote par exemple. Elle se rapporte plus particulièrement aux mesures de distance réalisées par un radar embarqué à bord de l'un ou l'autre de ces engins. tel que le système d'assistance au pilotage d'un aéronef divulgué dans la demande de brevet EP 2 605 037 A1. Dans cette demande de brevet, le système comprenant des moyens de mesure réalisant des mesures de distance de l'aéronef par rapport au sol en utilisant au moins trois voies d'émission indépendantes et au moins trois voies de réception. Les moyens de mesure comprennent un système radar, comprenant une antenne d'émission produisant au moins trois faisceaux sur les trois voies, une antenne de réception pour recueillir les signaux reçus en écho, et des moyens de gestion radar pour extraire à partir des signaux reçus, des mesures de vitesses et de distances de l'aéronef par rapport au sol, chaque distance étant déterminée par une mesure du retard du signal reçu en écho d'un signal émis, et chaque vitesse étant déterminée par une mesure du décalage en fréquence entre le signal émis et le signal reçu en écho.

Les systèmes radars actuels adoptent un mode de fonctionnement spécifique pour réaliser une mesure de la distance qui sépare l'engin embarquant le radar du sol. Ce mode de fonctionnement met en oeuvre l'émission de signaux radioélectriques par le radar en direction du sol et l'analyse de signaux reçus par le radar, obtenus après la réflexion des signaux radioélectriques émis par le sol. L'analyse des représentations temps-fréquence des signaux émis et reçus permet de déterminer le retard entre les signaux émis et les signaux reçus et de déterminer la distance qui sépare le système aéroporté du sol.

Selon ce mode de fonctionnement, deux signaux radioélectriques notés $e_0(t)$ et $e_1(t)$ sont émis en direction du sol pendant un intervalle de temps $T_E$. La fréquence du premier signal $e_0(t)$ présente une variation linéaire positive pendant la première moitié de l'intervalle de temps $[0,T_E/2]$ et la fréquence du second signal $e_1(t)$ présente une variation linéaire négative pendant la seconde moitié de l'intervalle de temps de transmission $[T_E/2,T_E]$. Les fréquences des signaux émis varient dans une bande de fréquence B. Les signaux radioélectriques $e_0(t)$ et $e_1(t)$ sont rayonnés par une antenne émettrice et sont modulés linéairement en fréquence en fonction du temps de sorte qu'ils ont pour expressions :

[Math.1]

$$e_0(t) = e^{i2\pi K t^2} \; ; \; e_1(t) = e^{i2\pi\left(-K\left(t-{T_E}/{2}\right)+B\right)\left(t-{T_E}/{2}\right)}$$

avec $K=B/T_E$, B représentant la bande de fréquences émise et $T_E$ représentant le temps d'émission, ou temps d'éclairement. Le signal $e_1(t)$ correspond à une translation temporelle égale $T_E$ du signal $e_0(t)$.

Les signaux $e_0(t)$ et $e_1(t)$ émis sont réfléchis par le sol. Les signaux réfléchis sont également des signaux modulés linéairement en fréquence, leurs fréquences varient sur la bande B et représentent par rapport aux signaux émis, un décalage temporel, un retard, noté $\tau$, et un décalage en fréquence noté $f_D$ dû à l'effet Doppler engendré par le mouvement du porteur. Le décalage temporel $\tau$ et le décalage en fréquence sont fonctions de la distance d séparant le radar du sol. Plus précisément, le retard temporel entre les signaux reçus et les signaux émis est donné par l'expression $\tau = 2d/c$, où c représente la vitesse de la lumière dans le vide.

Les signaux réfléchis sont ensuite reçus par le système radar. Les signaux $r_0(t)$ et $r_1(t)$ correspondent respectivement aux signaux reçus suite à la réflexion par le sol des signaux $e_0(t)$ et $e_1(t)$ Tenant compte des décalages temporels et en fréquence par rapport aux signaux émis (le signal $r_0(t)$ présente un décalage temporel $\tau$ et un décalage en fréquence $f_D$ par rapport au signal $e_0(t)$ et le signal $r_1(t)$ présente un décalage temporel $\tau$ et un décalage en fréquence $f_D$ par rapport au signal $e_1(t)$), les signaux réfléchis reçus ont pour expressions :

[Math. 2]

$$r_0(t) = e^{i.2.\Pi(Kt(t-\tau)+f_D t)} = e_0(t) \cdot e^{i.2.\Pi(-K\tau+f_D)t}$$

[Math. 3]

$$r_1(t) = e_1(t) \cdot e^{i.2.\Pi(K\tau+f_D)\left(t-\frac{T_E}{2}\right)} = e^{i2\pi(-K\left(t-\frac{T_E}{2}-\tau\right)+B+f_D)(t-\frac{T_E}{2})}$$

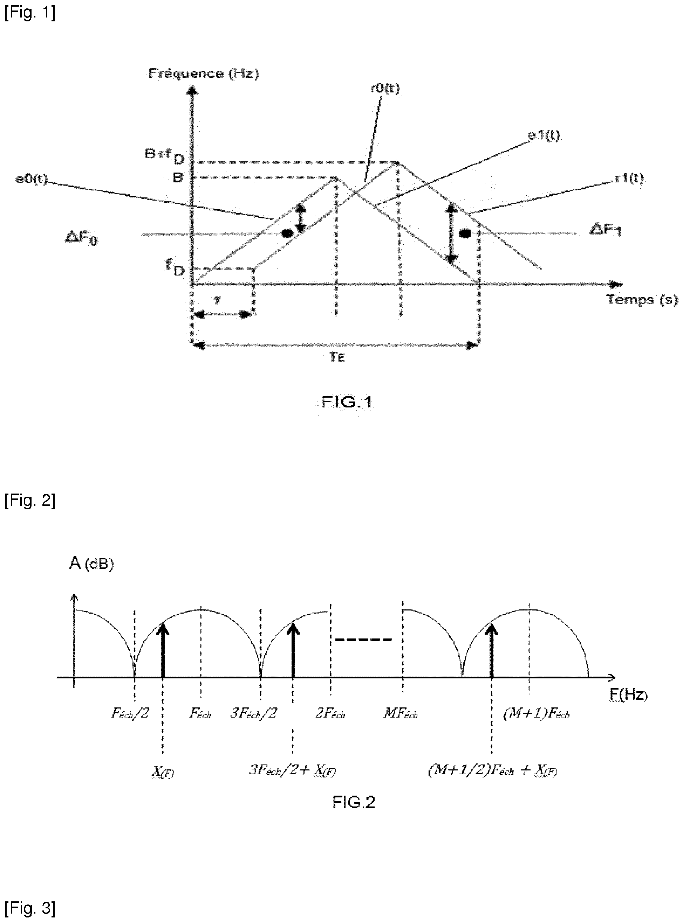

La figure 1 représente les signaux émis et les signaux reçus en fonction du temps.

Les signaux reçus sont ensuite démodulés et convertis en signaux numériques.

La détermination de la mesure de la distance d séparant le système radar du sol se base selon ce mode de fonctionnement sur une analyse spectrale des signaux reçus. Dans ce contexte, une représentation temps/fréquence des signaux émis et des signaux reçus est effectuée. En particulier, pour les instants t compris entre 0 et $T_E/2$, le premier signal émis $e_0(t)$ peut être représenté dans le domaine fréquentiel par le signal $E_0(t)$ donné par :

[Math. 4]

$$E_0(t) = Kt$$

Le signal $E_0(t)$ représente la valeur de la fréquence du premier signal $e_0(t)$ à l'instant t considéré. Il se présente comme une rampe de fréquence avec un coefficient (une pente) égal(e) à $K=B/T_E$.

Pour les instants t compris entre $T_E/2$ et $T_E$, le second signal émis $e_1(t)$ peut être représenté dans le domaine fréquentiel par le signal $E_1(t)$ donné par :

[Math.5]

$$E_1(t) = -Kt + B$$

Le signal $E_1(t)$ représente la valeur de la fréquence du second signal $e_1(t)$ à l'instant t considéré. Il se présente comme une rampe de fréquence avec un coefficient (une pente) égal(e) à $-K$.

De manière analogue, les signaux reçus peuvent être représentés dans le domaine fréquentiel. Plus précisément, le signal reçu $r_0(t)$ correspondant à la réflexion par le sol du premier signal $e_0(t)$ peut être représenté dans le domaine fréquentiel, pour les instants $t$ compris entre 0 et $T_E/2$, par le signal $R_0(t)$ donné par :

[Math. 6]

$$R_0(t) = K(t - \tau) + f_D$$

$R_0(t)$ représente la valeur de la fréquence du signal $r_0(t)$ à l'instant $t$ considéré. Il se présente comme une rampe de fréquence semblable au signal $E_0(t)$ mais décalée d'un intervalle de temps $\tau$, sur l'axe des abscisses et d'une fréquence $f_D$ sur l'axe des fréquences (l'axe des ordonnées).

Pour les instants $t$ compris entre $T_E/2$ et $T_E$, le signal reçu $r_1(t)$ correspondant à la réflexion par le sol du second signal $e_1(t)$ peut être représenté dans le domaine fréquentiel par le signal $R_1(t)$ donné par :

[Math. 7]

$$R_1(t) = -K(t - \tau) + B + f_D$$

$R_1(t)$ représente la valeur de la fréquence du signal $r_1(t)$ à l'instant $t$ considéré. Il se présente comme une rampe de fréquence semblable au signal $E_1(t)$ mais décalée d'un intervalle de temps $\tau$ sur l'axe des abscisses et d'une fréquence $f_D$ sur l'axe des fréquences (l'axe des ordonnées).

Le décalage entre le premier signal émis $e_0(t)$ et le signal reçu $r_0(t)$ peut être représenté également dans le domaine fréquentiel en effectuant la différence entre la valeur de la fréquence $R_0(t)$ représentant la valeur de la fréquence du signal reçu $r_0(t)$ et la valeur de la fréquence $E_0(t)$ représentant la valeur de la fréquence du premier signal émis $e_0(t)$ à l'instant considéré. Le décalage peut ainsi être représenté par la grandeur fréquentielle $\Delta F_0$ donnée par :

[Math. 8]

$$\Delta F_0 = R_0(t) - E_0(t) = -K\tau + f_D$$

De manière analogue, le décalage entre le second signal émis $e_1(t)$ et le signal reçu $r_1(t)$ peut être représenté dans le domaine fréquentiel en effectuant la différence entre la valeur de la fréquence $R_1(t)$ représentant la valeur de la fréquence du signal reçu $r_1(t)$ et la valeur de la fréquence $E_1(t)$ représentant la valeur de la fréquence du second signal émis $e_1(t)$ à l'instant considéré. Le décalage peut ainsi être représenté par la grandeur fréquentielle $\Delta F_1$ donnée par :

[Math. 9]

$$\Delta F_1 = R_1(t) - E_1(t) = K\tau + f_D$$

Les mesures fréquentielles $\Delta F_0$ et $\Delta F_1$ permettent de déterminer le décalage temporel $\tau$ et par conséquent la mesure de la distance déterminée à partir du retard $\tau$ suivant l'équation d=c. $\tau$ /2. En effet, en effectuant la différence entre les mesures de fréquence il est possible d'écrire une grandeur fréquentielle D comme :

[Math. 10]

$$D = \Delta F_1 - \Delta F_0 = 2K.\tau$$

La détermination de la grandeur fréquentielle *D* permet ainsi de déterminer le retard $\tau$. La différence de fréquence *D* est une grandeur à valeur toujours strictement positive puisqu'elle est proportionnelle au retard temporel et donc à la distance.

La mesure de la distance d séparant le système radar du sol est déterminée en effectuant une analyse spectrale du signal *D.* L'analyse spectrale comprend une étape d'échantillonnage du signal *D* par un signal d'horloge avec une fréquence d'échantillonnage $F_{éch}$ (correspondant à une période d'échantillonnage $T_{éch}=1/F_{éch}$) et une étape de décomposition spectrale par exemple par une transformée de Fourier rapide ('Fast Fourier Transform' en anglais). Le spectre ainsi formé est constitué d'échantillons fréquentiels. La détermination du spectre du signal *D* par la détermination des échantillons fréquentiels, permet, selon l'équation (Math. 10), de déterminer des mesures de fréquence (donnée par $2K\tau$) du signal *D* à chaque instant considéré et par la suite de déterminer le retard $\tau$ et la distance d que l'on souhaite mesurer.

L'expression dans le domaine amplitude/temps du signal *D* peut être sous la forme :

[Math. 11]

$$x_{(t)} = Ae^{-iK\omega\tau t}$$

avec A représentant l'amplitude du signal.

La figure 2 représente le spectre du signal $x_{(t)}$ échantillonné sur M points à la fréquence $F_{éch}$. Le spectre du signal $x_{(t)}$ se présente comme un spectre élémentaire de largeur égale $F_{éch}$, répliqué dans l'espace des fréquences avec une périodicité égale à $F_{éch}$.

Après FFT, ce signal est noté $X_{(F)}$. Les échantillons spectraux sont notés $f_j=X^*_j(F)$ et sont donnés, selon l'expression de la FFT classique par :

[Math. 12]

$$f_j = X_j^*(F) = \sum_{m=0}^{n-1} x_m e^{-\frac{i2\pi}{n}jm} \ avec \ j = 0, ..., n-1$$

avec n représentant le nombre d'échantillons spectraux.

Les pas en fréquence de la FFT sont espacés de manière constante. La résolution fréquentielle de la FFT, donnée par $\Delta F = 1/(n.T_{éch})$, est aussi constante. Ainsi, plus la fréquence est élevée, plus le rapport $P = F/\Delta F$ augmente, ce rapport désignant la valeur de la précision de mesure de la fréquence et donc la valeur de la précision de mesure de distance radar-sol.

La décomposition spectrale du signal $x_{(t)}$ permet de déterminer, de manière non ambiguë, le spectre de fréquences (la fréquence centrale) du signal $X_{(F)}$ pour autant que la bande de fréquences occupée par $X_{(F)}$ soit inférieur à $F_{éch}/2$. Dans le cas où la bande de fréquence occupée par $X_{(F)}$ est supérieure à cette valeur, il y a une ambigüité en fréquence due au repliement du spectre de $X_{(F)}$ dans une bande $[-F_{éch}/2, F_{éch}/2]$ répliquée de manière périodique autour de fréquences multiples de la fréquence $F_{éch}$. Dans ce dernier cas la fréquence du signal $X_{(F)}$ (et donc le retard $\tau$) ne peut être déterminée que modulo la fréquence d'échantillonnage $F_{éch}$.

Pour s'affranchir des problèmes d'ambigüité de fréquences générés par l'échantillonnage du signal $x_{(t)}$, une solution connue consiste à augmenter la fréquence d'échantillonnage. Mais cette solution nécessite soit d'augmenter le nombre de coefficients de la FFT utilisée pour la décomposition spectrale, et donc de traiter un nombre plus important d'échantillons spectraux, soit de dégrader la résolution fréquentielle de la réponse spectrale obtenue par la FFT, ce qui amène à la dégradation de la résolution en distance. Or un tel accroissement de la charge de calcul nécessite de disposer de capacités de calcul suffisantes pour réaliser, dans le temps disponible, un calcul de la FFT sur un nombre de points suffisants.

Par ailleurs, selon la valeur de la fréquence F du signal $X_{(F)}$, il est parfois difficile, à moins de disposer des capacités de calcul nécessaires, de réaliser une mesure de distance sur une plage de distance donnée avec une résolution satisfaisante, à partir de la simple décomposition spectrale par FFT.

Il est par conséquent nécessaire de développer des moyens de mesure de distance radar-sol par simple analyse spectrale par FFT du signal échantillonné $x_{(t)}$.

L'apparition d'ambigüités est induite par le compromis devant être réalisé entre l'utilisation d'une fréquence d'échantillonnage suffisante pour éviter toute ambigüité spectrale, le nombre de mesures sur lequel la FFT doit être effectuée pour obtenir la résolution spectrale souhaitée et la capacité de calcul disponible pour effectuer une FFT sur le nombre de points voulu.

A cet effet l'invention a pour objet, un système radar pour déterminer des mesures de distance radar-sol séparant un aéronef du sol par des mesures radar. Le système radar comprend des moyens d'émission et de réception configurés pour émettre deux signaux radioélectriques en direction du sol et pour recevoir les signaux obtenus par la réflexion des deux signaux émis par le sol. Le système radar peut comprendre des moyens de calculs configurés pour déterminer les représentations fréquentielles des signaux émis et des signaux reçus et déterminer une grandeur fréquentielle en fonction de ces représentations fréquentielles. Le système radar est caractérisé en ce que les moyens de calculs sont configurés pour

- échantillonner la grandeur fréquentielle sur un nombre d'échantillons déterminé, ce qui fournit un signal échantillonné ;

- déterminer un nombre de mesures de fréquences en fonction d'une valeur de précision de mesure de distance constante ;

- déterminer des mesures de fréquence en appliquant au signal échantillonné une décomposition spectrale par transformée de Fourier rapide sur le nombre de mesures, la transformée de Fourier utilisant une décimation du signal échantillonné dans un rapport dépendant de la valeur de précision de mesure de distance, et

- déterminer une mesure de distance correspondant à chaque mesure de fréquence.

Dans un mode de réalisation, les signaux émis peuvent être constitués d'un premier signal radioélectrique émis et d'un second signal radioélectrique émis, les signaux reçus étant constitués d'un premier signal reçu et d'un second signal reçu, le premier signal reçu correspondant au signal obtenu par la réflexion du premier signal émis par le sol, le second signal reçu correspondant au signal obtenu par la réflexion du second signal émis par le sol, les moyens de calcul étant configurés pour déterminer la grandeur fréquentielle en calculant la différence entre un premier signal fréquentiel et un second signal fréquentiel, le premier signal fréquentiel correspondant à la différence entre la représentation fréquentielle du premier signal reçu et la représentation fréquentielle du premier signal émis, le second signal fréquentiel correspondant à la différence entre la représentation fréquentielle du second signal reçu et la représentation fréquentielle du second signal émis.

Dans un mode de réalisation, les moyens de calculs peuvent être configurés pour échantillonner la grandeur fréquentielle selon une période d'échantillonnage, les moyens de calcul étant configurés pour déterminer une période d'échantillonnage minimale en fonction d'une valeur maximale de fréquence et pour déterminer un nombre d'échantillons du signal échantillonné en fonction d'une valeur minimale de fréquence et de la période d'échantillonnage minimale.

Dans un mode de réalisation, les moyens de calcul peuvent être configurés pour déterminer un paramètre intermédiaire en fonction de la valeur de précision de mesure de distance, le paramètre intermédiaire étant calculé en divisant une première valeur par une seconde valeur, la première valeur étant calculée en additionnant la valeur de précision de mesure à la valeur deux, la seconde valeur étant calculée en soustrayant la valeur de précision de mesure de distance de la valeur deux, les moyens de calcul étant configurés pour déterminer le nombre de mesures de fréquence en fonction d'une valeur minimale de fréquence, d'une valeur maximale de fréquence et du paramètre intermédiaire.

Dans un mode de réalisation, les moyens de calcul peuvent être configurés pour déterminer le nombre de mesures de fréquence par la division d'une première fonction logarithmique par une seconde fonction logarithmique, la première fonction logarithmique correspondant au logarithme népérien du rapport entre la valeur maximale de fréquence et la valeur minimale de fréquence, la seconde fonction logarithmique correspondant au logarithme népérien du paramètre intermédiaire.

L'invention fournit en outre un procédé pour déterminer des mesures de distance radar-sol, le procédé comprenant :

- l'émission de deux signaux radioélectriques en direction du sol et la réception des signaux obtenus par la réflexion des deux signaux émis par le sol;

- la détermination de représentations fréquentielles des signaux émis et des signaux reçus ;

- la détermination d'une grandeur fréquentielle en fonction des représentations fréquentielles.

Le procédé est caractérisé en ce qu'il comprend les étapes comprenant :

- l'échantillonnage de la grandeur fréquentielle sur un nombre d'échantillons déterminé, ce qui fournit un signal échantillonné ;

- la détermination d'un nombre de mesures de fréquences en fonction d'une valeur de précision de mesure de distance constante ;

- la détermination de mesures de fréquence en appliquant au signal échantillonné une décomposition spectrale par transformée de Fourier rapide sur le nombre de mesures, la transformée de Fourier utilisant une décimation du signal échantillonné dans un rapport dépendant de la valeur de précision de mesure de distance, et

- la détermination d'une mesure de distance correspondant à chaque mesure de fréquence.

Avantageusement, les modes de réalisation de l'invention permettent d'améliorer et d'adapter la résolution en distance en fonction de la distance radar-sol mesurée sans augmenter le nombre de mesures FFT utilisés pour réaliser la décomposition spectrale du signal fréquentiel dérivé de l'échantillonnage du signal fréquentiel dépendant des représentations fréquentielles des signaux émis et des signaux reçus.

Avantageusement, les modes de réalisation de l'invention permettent des mesures de distance par transformée de Fourier adaptée en conservant la précision de la mesure de distance (qui est constante) en fonction de la distance mesurée (ou la résolution fréquentielle) et en adaptant le pas fréquentiel des mesures ou calculs de FFT par décimation à la distance mesurée.

Avantageusement, les modes de réalisation de l'invention permettent d'ajuster la résolution fréquentielle en fonction de la distance mesurée.

Avantageusement, les modes de réalisation de l'invention permettent des mesures de distance qui ne conservent pas une résolution fréquentielle constante en fonction de l'accroissement de fréquence pour tenir une valeur de précision de mesure de distance constante. Ceci est obtenu en espaçant les périodes d'échantillonnage par décimation en fonction de la fréquence à mesurer.

Les dessins annexés illustrent l'invention :

[Fig. 1] représente des diagrammes dans un repère temps-fréquence des signaux émis et des signaux reçus selon le mode de fonctionnement du système radar selon l'invention.

[Fig. 2] représente le spectre du signal fréquentiel dérivé à partir des représentations fréquentielles des signaux émis et des signaux reçus et l'échantillonnage de ce signal selon l'art antérieur.

[Fig. 3] représente une vue schématique d'un système radar, selon certains modes de réalisation de l'invention.

[Fig. 4] représente un organigramme illustrant un procédé pour déterminer des mesures de distance radar-sol, selon certains modes de réalisation de l'invention.

[Fig. 5] représente un organigramme illustrant un procédé pour déterminer des mesures de fréquence par FFT adaptée, selon certains modes de réalisation de l'invention.

Les modes de réalisation de l'invention fournissent un système radar et un procédé pour déterminer des mesures de distance radar-sol selon un mode de fonctionnement qui met en oeuvre l'analyse spectrale des représentations fréquentielles des signaux radioélectriques émis en direction du sol et des signaux reçus suite à la réflexion des signaux émis par le sol.

Le système radar et le procédé selon l'invention peuvent être utilisés par exemple dans des systèmes aéroportés, des hélicoptères ou des aéronefs avec ou sans pilote par exemple.

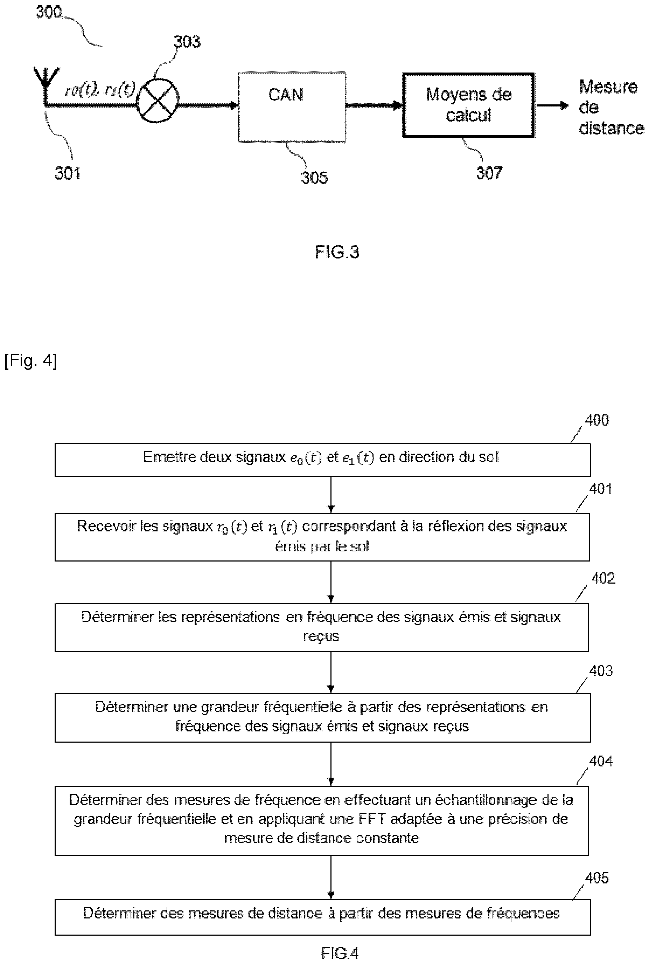

En référence à la Figure 3, un système radar 300 configuré pour déterminer des mesures de distance séparant le radar du sol est illustré, selon certains modes de réalisation de l'invention. Le système radar 300 est configuré pour déterminer les mesures de distance en utilisant le mode de fonctionnement basé sur l'émission de signaux radioélectriques vers le sol, la réception de ces signaux après réflexion par le sol, et l'analyse spectrale des signaux émis et reçus. Pour cet effet, le système radar 300 peut comprendre des moyens d'émission et de réception 301 configurés pour émettre deux signaux radioélectriques $e_0(t)$ et $e_1(t)$ en direction du sol pendant un intervalle de temps $T_E$ et pour recevoir les signaux obtenus par la réflexion des deux signaux émis par le sol, notés $r_0(t)$ et $r_1(t)$. La fréquence du premier signal $e_0(t)$ présente une variation linéaire positive pendant la première moitié de l'intervalle de temps $[0, T_E/2]$ et la fréquence du second signal $e_1(t)$ présente une variation linéaire négative pendant la seconde moitié de l'intervalle de temps de transmission $[T_E/2, T_E]$. Les fréquences des signaux émis varient dans une bande de fréquence B. Les signaux radioélectriques $e_0(t)$ et $e_1(t)$ sont rayonnés par les moyens d'émission 301, sont modulés linéairement en fréquence en fonction du temps et ont pour expressions celles données à l'équation (Math.1).

Les signaux $e_0(t)$ et $e_1(t)$ émis sont réfléchis par le sol. Les signaux réfléchis sont également des signaux modulés linéairement en fréquence, leurs fréquences varient sur la bande B et représentent par rapport aux signaux émis, un décalage temporel $\tau$ et un décalage en fréquence noté $f_D$ dû à l'effet Doppler engendré par le mouvement du porteur. Les signaux reçus par les moyens de réception 301 comprennent un premier signal reçu $r_0(t)$ correspondant au signal reçu suite à la réflexion du premier signal émis $e_0(t)$ par le sol et un second signal reçu $r_1(t)$ correspondant au signal reçu suite à la réflexion du second signal émis $e_1(t)$ par le sol. Les signaux reçus ont pour expressions celles données aux équations (Math.2) et (Math.3).

Le système radar 300 peut comprendre un mélangeur 303 configuré pour démoduler (ou transposer) les signaux reçus avec la réplique des signaux émis utilisant un codeur numérique analogique (CAN) 305 configuré pour convertir les signaux transposés en signaux numériques.

Le système radar 300 peut aussi comprendre des moyens de calcul 307 configurés pour effectuer une analyse spectrale des signaux démodulés convertis afin de déterminer des mesures de distance séparant le radar du sol à partir de mesures de fréquences.

Dans un premier temps, les moyens de calcul 307 peuvent être configurés pour déterminer les représentations fréquentielles des signaux émis et des signaux reçus. Pour les instants t compris entre 0 et $T_E/2$, les représentations fréquentielles $E_0(t)$ et $R_0(t)$ du premier signal émis $e_0(t)$ et du premier signal reçu $r_0(t)$ sont données respectivement par les équations (Math.4) et (Math.6). Pour les instants $t$ compris entre $T_E/2$ et $T_E$, les représentations fréquentielles $E_1(t)$ et $R_1(t)$ du second signal émis $e_1(t)$ et du second signal reçu $r_1(t)$ sont données respectivement par les équations (Math.5) et (Math.7)

Selon un mode de réalisation, les moyens de calcul 307 peuvent être configurés pour déterminer une grandeur fréquentielle $D$ en fonction des représentations fréquentielles des signaux émis et des signaux reçus. Plus précisément, les moyens de calcul 307 peuvent être configurés pour déterminer la grandeur fréquentielle $D$ en calculant la différence entre un premier signal fréquentiel $\Delta F_0$ et un second signal fréquentiel $\Delta F_1$, le premier signal fréquentiel $\Delta F_0$ correspondant à la différence entre la représentation fréquentielle du premier signal reçu $R_0(t)$ et la représentation fréquentielle du premier signal émis $E_0(t)$ comme exprimé à l'équation (Math.8), le second signal fréquentiel $\Delta F_1$ correspondant à la différence entre la représentation fréquentielle du second signal reçu $R_1(t)$ et la représentation fréquentielle du second

signal émis $E_1(t)$, comme exprimé dans l'équation (Math.9).

Selon un mode de réalisation de l'invention, les moyens de calcul 307 peuvent être configurés pour déterminer le décalage temporel $\tau$ et par conséquent les mesures de distance radar-sol à partir de la grandeur fréquentielle $D$ selon la relation donnée par l'équation (Math.10). Plus spécifiquement, les moyens de calcul 307 peuvent être configurés pour déterminer des mesures en distance radar-sol en effectuant une analyse spectrale de la grandeur fréquentielle $D$. L'analyse spectrale comprend une étape d'échantillonnage du signal $D$ par un signal d'horloge avec une fréquence d'échantillonnage $F_{éch}$ correspondant à une période d'échantillonnage $T_{éch}$ >=$1/F_{éch}$ et une étape de décomposition spectrale par une transformée de Fourier rapide.

Pour effectuer l'échantillonnage de la grandeur fréquentielle $D$, les moyens de calcul 307 peuvent être configurés pour déterminer une période d'échantillonnage minimale $T_{éch}$ en fonction d'une valeur maximale de fréquence $f_N$ selon la relation donnée par :

[Math.13]

$$T_{éch} = {}^{1}\!/_{2f_N}$$

L'expression dans le domaine amplitude/temps de la grandeur fréquentielle **D** peut être donnée par l'équation (Math.11).

Les moyens de calcul 307 peuvent être configurés pour déterminer un nombre **Z** des échantillons $x_m$ à acquérir du signal échantillonné en fonction d'une valeur minimale de fréquence $f_0$ et de la période d'échantillonnage selon la relation donnée par :

[Math.14]

$$Z = \frac{1}{f_0}\!/T_{éch}$$

Les moyens de calcul 307 peuvent être configuré à échantillonner la grandeur fréquentielle représentée par le signal $x_{(t)}$ sur $Z$ points (ou échantillons).

La détermination des mesures de distance selon l'invention s'effectue par la détermination d'un nombre **N** de mesures de fréquences par FFT adaptée appliquée au signal échantillonné en conservant une valeur de précision de mesure de distance **P** constante.

Les moyens de calcul 307 peuvent être configurés pour déterminer un nombre **N** de mesures de fréquences en fonction d'une valeur de précision de mesure de distance **P** donnée. Plus précisément, les moyens de calcul 307 peuvent être configurés pour déterminer un paramètre intermédiaire **L** en fonction d'une valeur de précision de mesure de distance **P** donnée, le paramètre intermédiaire étant calculé en divisant une première valeur par une seconde valeur, la première valeur (2+$P$) étant calculée en additionnant ladite précision de mesure à la valeur deux, la seconde valeur (2-$P$) étant calculée en soustrayant la valeur de précision de mesure $P$ de distance de la valeur deux. Le paramètre intermédiaire s'exprime alors par :

[Math.15]

$$L = {}^{(2+P)}\!\big/_{(2-P)}$$

Dans un mode de réalisation de l'invention, les moyens de calcul 307 peuvent être configurés pour déterminer le nombre $N$ de mesures de fréquences à effectuer par la FFT, c'est-à-dire le nombre d'échantillons spectraux de la FFT, en fonction d'une valeur minimale de fréquence, d'une valeur maximale de fréquence et du paramètre intermédiaire. Plus précisément, les moyens de calcul 307 peuvent être configurés pour déterminer le nombre $N$ de mesures de fréquences $f_j=X^*_j(F)$ à calculer par la FFT adaptée en effectuant la division d'une première fonction logarithmique par une seconde fonction logarithmique, la première fonction logarithmique correspondant au logarithme Népérien du rapport entre la valeur maximale de fréquence $f_N$ et la valeur minimale de fréquence $f_0$, la seconde fonction logarithmique correspondant au logarithme Népérien du paramètre intermédiaire $L$. Le nombre $N$ de mesures de fréquences par FFT est ainsi exprimé par :

[Math.16]

$$N = \frac{\ln\left(f_N / f_0\right)}{\ln(L)}$$

Une fois le nombre de mesures de fréquences à effectuer est déterminé, les moyens de calcul 307 peuvent être configurés pour déterminer les $N$ mesures de fréquence $f_j = X^*_j(F)$ en appliquant au signal échantillonné $x_{(t)}$ une décomposition spectrale par transformée de Fourier rapide sur $N$ points, la transformée de Fourier utilisant une décimation du signal échantillonné dans un rapport dépendant de la valeur de précision de mesure de distance. Plus précisément, pour chaque calcul d'une mesure de fréquence $f_j = X^*_j(F)$ d'indice $j$, la décimation du signal échantillonné est effectuée dans un rapport égal à $1/L^{(N-j)}$, donné par l'inverse du paramètre intermédiaire puissance la différence entre le nombre de mesures de fréquence $N$ et l'indice de la mesure de fréquence $j$.

Selon les modes de réalisation de l'invention, les mesures de fréquences par FFT adaptée sont exprimées par :

[Math.17]

$$f_j = X^*_j(F) = \sum_{m=0}^{N-1} x_m e^{-\frac{i2\pi}{N} j m K^{(N-j)}} \quad avec \; j = 0, \dots, N-1$$

La détermination d'une mesure de fréquence $f_j$ permet la détermination d'une valeur du retard $\tau$ selon la relation de l'équation (Math.10) reformulée pour les mesures de fréquences calculées par FFT par $f_j = 2K\tau$. La détermination du retard $\tau$ à la fréquence mesurée permet la détermination d'une mesure de distance d correspondant à cette mesure de fréquence selon la relation d=c. $\tau/2$ .

Dans un mode de réalisation de l'invention, la valeur de précision de mesure de distance peut être donnée en pourcentage.

La FFT adaptée selon l'invention permet d'adapter le pas fréquentiel des mesures de fréquence par FFT, par décimation, à la distance mesurée, tout en gardant une valeur de précision de mesure de distance constante en fonction de la fréquence mesurée. En effet, pour tenir une valeur de précision de mesure de distance constante, il n'est pas nécessaire, selon l'invention, de conserver une résolution fréquentielle constante en fonction de l'accroissement de fréquence.

Selon les modes de réalisation de l'invention, le pas fréquentiel de la FFT, noté $\Delta F_j$ est élargi progressivement de manière à conserver la valeur de précision de mesure de distance $P = \Delta F_j / f_j$ constant. Les valeurs de $f_j$ sont réparties de manière non constante et les valeurs de $x_m$ sont des échantillons espacés différemment dans le temps en fonction des fréquences mesurées $f_j$. La décimation du signal échantillonné dépend ainsi de la fréquence mesurée comme illustré dans le rapport de décimation pour la $j^{eme}$ mesure de fréquence $f_j$ donné par $1/(L^{(N-j)})$.

L'invention fournit aussi un procédé pour déterminer des mesures de distance radar-sol par analyse spectrale de signaux radioélectriques émis et reçus par un système radar tout en conservant une valeur de précision de mesure de distance constant en fonction de l'accroissement des fréquences mesurées.

En référence à la Figure 4, le procédé peut comprendre des étapes pour l'émission et la réception de deux signaux radioélectriques et des étapes pour le traitement des signaux reçus.

A l'étape 400, deux signaux radioélectriques $e_0(t)$ et $e_1(t)$ peuvent être émis en direction du sol pendant un intervalle de temps $T_E$ tel que La fréquence du premier signal $e_0(t)$ présente une variation linéaire positive pendant la première moitié de l'intervalle de temps $[0, T_E/2]$ et la fréquence du second signal $e_1(t)$ présente une variation linéaire négative pendant la seconde moitié de l'intervalle de temps de transmission $[T_E/2, T_E]$. Les fréquences des signaux émis varient dans une bande de fréquence B. Les signaux radioélectriques $e_0(t)$ et $e_1(t)$ sont modulés linéairement en fréquence en fonction du temps et ont pour expressions celles données à l'équation (Math.1).

A l'étape 401, les signaux obtenus par la réflexion des signaux émis par le sol peuvent être reçus. Les signaux reçus comprennent un premier signal reçu $r_0(t)$ correspondant au signal reçu suite à la réflexion du premier signal émis $e_0(t)$ par le sol et un second signal reçu $r_1(t)$ correspondant au signal reçu suite à la réflexion du second signal émis $e_1(t)$ par le sol. Les signaux reçus ont pour expressions celles données aux équations (Math.2) et (Math.3). L'étape 401 peut comprendre une sous-étape pour la démodulation des signaux reçus et la conversion des signaux démodulés en signaux analogiques.

A l'étape 402, des représentations fréquentielles des signaux émis et des signaux reçus peuvent être déterminées. Pour les instants t compris entre 0 et $T_E/2$, les représentations fréquentielles $E_0(t)$ et $R_0(t)$ du premier signal émis $e_0(t)$ et du premier signal reçu $r_0(t)$ peuvent être déterminés respectivement par les équations (Math.4) et (Math.6). Pour les instants t compris entre $T_E/2$ et $T_E$, les représentations fréquentielles $E_1(t)$ et $R_1(t)$ du second signal émis $e_1(t)$ et du second signal reçu $r_1(t)$ peuvent être déterminés respectivement par les équations (Math.5) et (Math.7).

A l'étape 403, une grandeur fréquentielle $D$ peut être déterminée en fonction des représentations fréquentielles des signaux émis et des signaux reçus. Plus précisément, la grandeur fréquentielle $D$ peut être déterminée en calculant la différence entre un premier signal fréquentiel $\Delta F_0$ et un second signal fréquentiel $\Delta F_1$, le premier signal fréquentiel $\Delta F_0$ correspondant à la différence entre la représentation fréquentielle du premier signal reçu $R_0(t)$ et la représentation fréquentielle du premier signal émis $E_0(t)$ comme exprimé à l'équation (Math.8), le second signal fréquentiel $\Delta F_1$ correspondant à la différence entre la représentation fréquentielle du second signal reçu $R_1(t)$ et la représentation fréquentielle du second signal émis $E_1(t)$, comme exprimé dans l'équation (Math.9).

A l'étape 404, $N$ mesures de fréquence $f_j=X^*_j(F)$, $j=1,...,N$ peuvent être déterminée en effectuant un échantillonnage de la grandeur fréquentielle $D$ sur un nombre d'échantillon $Z$ déterminé et en appliquant au signal échantillonné une décomposition spectrale par transformée de Fourier rapide sur le nombre $N$ de mesures de fréquences, la transformée de Fourier utilisant une décimation du signal échantillonné dans un rapport dépendant de la valeur de précision de mesure de distance.

Selon un mode de réalisation, le nombre $N$ de mesures peut être déterminé à l'étape 404 en fonction d'une valeur de précision de mesure de distance constante.

A l'étape 405, des mesures de distance radar-sol peuvent être déterminées à partir des mesures de fréquence déterminées à l'étape 404. Cette étape peut comprendre une sous-étape de détermination du décalage temporel utilisant la relation $f_j=2K\tau$ entre le décalage temporel et chaque mesure de fréquence, et une sous-étape de détermination d'une mesure de distance d correspondant au décalage temporel mesuré pour une mesure de fréquence donnée selon la relation d=c. $\tau/2$.

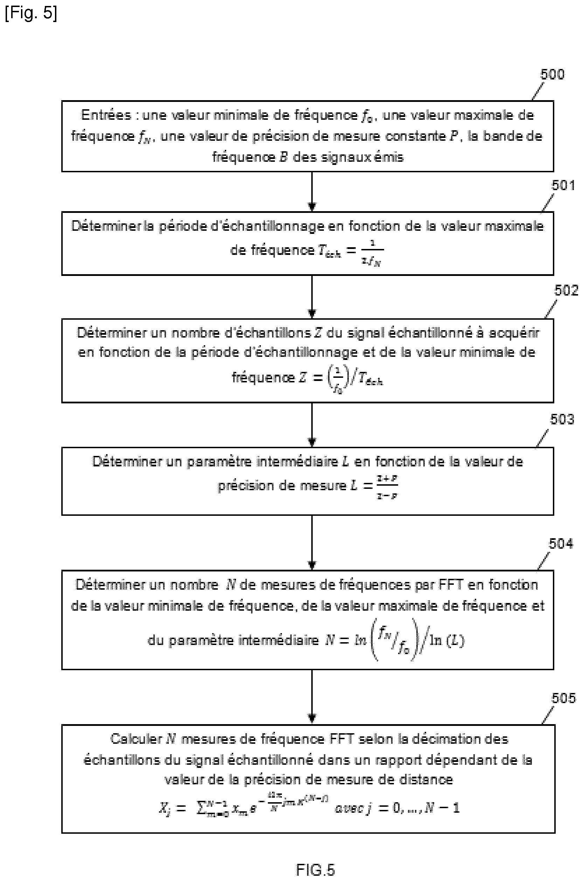

La Figure 5 est un organigramme illustrant l'étape 404 de détermination de mesures de fréquences selon certains modes de réalisation de l'invention.

A l'étape 500, une valeur minimale de fréquence $f_0$, une valeur maximale de fréquence $f_N$, une valeur de précision de mesure constante $P$, et la bande de fréquence $B$ des signaux émis peuvent être reçus.

A l'étape 501, une période d'échantillonnage minimale peut être déterminée en fonction de la valeur maximale de fréquence tel que $T_{éch} <=1/2f_N$.

A l'étape 502, un nombre d'échantillons $Z$ du signal échantillonné à acquérir peut être déterminé en fonction de la période d'échantillonnage et de la valeur minimale de fréquence tel que exprimé dans l'équation (Math.14).

A l'étape 503, un paramètre intermédiaire L peut être déterminé en fonction de la valeur de précision de mesure P tel que exprimé dans l'équation (Math.15).

A l'étape 504, le nombre N de mesures de fréquences à effectuer par la FFT, c'est-à-dire le nombre d'échantillons spectraux de la FFT, peut être déterminé en fonction de la valeur minimale de fréquence $f_0$, de la valeur de fréquence maximale $f_N$ et du paramètre intermédiaire L tel que donné dans l' équation (Math.16).

A l'étape 505, N mesures de fréquence $f_j=X^*_j(F)$ peuvent être déterminées en appliquant au signal échantillonné $x_{(t)}$ une décomposition spectrale par transformée de Fourier rapide sur N points, la transformée de Fourier utilisant une décimation du signal échantillonné dans un rapport dépendant de la valeur de précision de mesure de distance. Plus précisément, pour chaque calcul d'une mesure de fréquence $f_j=X^*_j(F)$ d'indice $j$, la décimation du signal échantillonné est effectuée dans un rapport égal à $1/L^{(N-j)}$, donné par l'inverse du paramètre intermédiaire puissance la différence entre le nombre de mesures de fréquence N et l'indice de la mesure de fréquence $j$. Les mesures de fréquence FFT sont données par l'équation (Math.17).

L'invention fournit par ailleurs un produit programme d'ordinateur comprenant des instructions de code permettant d'effectuer les étapes du procédé lorsque ledit programme est exécuté sur un ordinateur.

En général les routines exécutées pour mettre en oeuvre les modes de réalisation de l'invention, qu'elles soient mises en oeuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées dans les présentes comme "code de programme informatique" ou simplement "code de programme". Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

**Revendications**

**1.** Système radar (300) configuré pour déterminer des mesures de distance radar-sol, le système radar (300) comprenant :

- des moyens d'émission et de réception (301) configurés pour émettre deux signaux radioélectriques en direction du sol et pour recevoir les signaux obtenus par la réflexion des deux signaux émis par le sol;
- des moyens de calcul (307) configurés pour :

  * déterminer les représentations fréquentielles des signaux émis et des signaux reçus ;
  * déterminer une grandeur fréquentielle en fonction desdites représentations fréquentielles;

le système radar (300) étant **caractérisé en ce que** les moyens de calcul (307) sont configurés pour :

- échantillonner ladite grandeur fréquentielle sur un nombre d'échantillons déterminé, ce qui fournit un signal échantillonné ;
- déterminer un nombre de mesures de fréquences en fonction d'une valeur de précision de mesure de distance constante ;
- déterminer des mesures de fréquence en appliquant au signal échantillonné une décomposition spectrale par transformée de Fourier rapide sur ledit nombre de mesures, la transformée de Fourier utilisant une décimation du signal échantillonné dans un rapport dépendant de ladite valeur de précision de mesure de distance, et
- déterminer une mesure de distance correspondant à chaque mesure de fréquence.

**2.** Le système radar (300) selon la revendication 1, **caractérisé en ce que** les signaux émis sont constitués d'un premier signal radioélectrique émis et d'un second signal radioélectrique émis, les signaux reçus étant constitués d'un premier signal reçu et d'un second signal reçu, le premier signal reçu correspondant au signal obtenu par la réflexion dudit premier signal émis par le sol, le second signal reçu correspondant au signal obtenu par la réflexion dudit second signal émis par le sol, les moyens de calcul (307) étant configurés pour déterminer ladite grandeur fréquentielle en calculant la différence entre un premier signal fréquentiel et un second signal fréquentiel, ledit premier signal fréquentiel correspondant à la différence entre la représentation fréquentielle du premier signal reçu et la représentation fréquentielle du premier signal émis, le second signal fréquentiel correspondant à la différence entre la représentation fréquentielle du second signal reçu et la représentation fréquentielle du second signal émis.

**3.** Le système radar (300) selon la revendication 1, **caractérisé en ce que** les moyens de calcul (307) sont configurés pour échantillonner ladite grandeur fréquentielle selon une période d'échantillonnage, les moyens de calcul (307) étant configurés pour déterminer une période d'échantillonnage minimale en fonction d'une valeur maximale de fréquence et pour déterminer un nombre d'échantillons du signal échantillonné en fonction d'une valeur minimale de fréquence et de ladite période d'échantillonnage minimale.

**4.** Le système radar (300) selon la revendication 1, **caractérisé en ce que** les moyens de calcul (307) sont configurés pour déterminer un paramètre intermédiaire en fonction de ladite valeur de précision de mesure de distance, ledit paramètre intermédiaire étant calculé en divisant une première valeur par une seconde valeur, ladite première valeur étant calculée en additionnant ladite valeur de précision de mesure à la valeur deux, ladite seconde valeur étant calculée en soustrayant ladite valeur de précision de mesure de distance de la valeur deux, les moyens de calcul (307) étant configurés pour déterminer ledit nombre de mesures de fréquence en fonction d'une valeur minimale de fréquence, d'une valeur maximale de fréquence et dudit paramètre intermédiaire.

**5.** Le système radar (300) selon la revendication 4, **caractérisé en ce que** les moyens de calcul (307) sont configurés pour déterminer le nombre de mesures de fréquence par la division d'une première fonction logarithmique par une seconde fonction logarithmique, la première fonction logarithmique correspondant au logarithme népérien du rapport entre la valeur maximale de fréquence et la valeur minimale de fréquence, la seconde fonction logarithmique correspondant au logarithme népérien dudit paramètre intermédiaire.

**6.** Procédé pour déterminer des mesures de distance radar-sol comprenant :

- l'émission de deux signaux radioélectriques en direction du sol et la réception des signaux obtenus par la réflexion des deux signaux émis par le sol;
- la détermination de représentations fréquentielles des signaux émis et des signaux reçus ;

- la détermination d'une grandeur fréquentielle en fonction desdites représentations fréquentielles;

le procédé étant **caractérisé en ce qu'**il comprend les étapes comprenant :

- l'échantillonnage de ladite grandeur fréquentielle sur un nombre d'échantillons déterminé, ce qui fournit un signal échantillonné ;
- la détermination d'un nombre de mesures de fréquences en fonction d'une valeur de précision de mesure de distance constante ;
- la détermination de mesures de fréquence en appliquant au signal échantillonné une décomposition spectrale par transformée de Fourier rapide sur ledit nombre de mesures, la transformée de Fourier utilisant une décimation du signal échantillonné dans un rapport dépendant de ladite valeur de précision de mesure de distance, et
- la détermination d'une mesure de distance correspondant à chaque mesure de fréquence.

**Patentansprüche**

1. Radarsystem (300), das dafür konfiguriert ist, Distanzmessungen zwischen Radar und Boden zu bestimmen, wobei das Radarsystem (300) Folgendes umfasst:

   - Übertragungs- und Empfangsmittel (301), die dafür konfiguriert sind, zwei radioelektrische Signale in Richtung zum Boden zu übertragen und die durch Reflektion der beiden vom Boden übertragenen Signale erhaltenen Signale zu empfangen;
   - Rechenmittel (307), die dafür konfiguriert sind:

      * die frequentiellen Darstellungen der übertragenen Signale und der empfangenen Signale zu bestimmen;
      * eine frequentielle Größe in Abhängigkeit von den frequentiellen Darstellungen zu bestimmen;

   wobei das Radarsystem (300) **dadurch gekennzeichnet ist, dass** die Rechenmittel (307) dafür konfiguriert sind:

   - die frequentielle Größe über eine bestimmte Anzahl von Abtastungen abzutasten, wodurch sich ein abgetastetes Signal ergibt;
   - eine Anzahl an Frequenzmessungen in Abhängigkeit von einem konstanten Distanzmessungsgenauigkeitswert zu bestimmen;
   - Frequenzmessungen unter Anwendung einer spektralen Zerlegung durch schnelle Fourier-Transformation auf das abgetastete Signal über die Anzahl von Messungen zu bestimmen, wobei die Fourier-Transformation eine Dezimierung des abgetasteten Signals in einem Verhältnis abhängig von dem Distanzmessungsgenauigkeitswert verwendet, und
   - eine Distanzmessung entsprechend jeder Frequenzmessung zu bestimmen.

2. Radarsystem (300) nach Anspruch 1, **dadurch gekennzeichnet, dass** die übertragenen Signale aus einem ersten übertragenen radioelektrischen Signal und einem zweiten übertragenen radioelektrischen Signal bestehen, wobei die empfangenen Signale aus einem ersten empfangenen Signal und einem zweiten empfangenen Signal bestehen, wobei das erste empfangene Signal dem durch Reflektion des ersten, von dem Boden übertragenen Signals erhaltenen Signal entspricht, wobei das zweite empfangene Signal dem durch Reflektion des zweiten, von dem Boden übertragenen Signals erhaltenen Signal entspricht, wobei die Rechenmittel (307) dafür konfiguriert sind, die frequentielle Größe durch Berechnen der Differenz zwischen einem ersten frequentiellen Signal und einem zweiten frequentiellen Signal zu bestimmen, wobei das erste frequentielle Signal der Differenz zwischen der frequentiellen Darstellung des ersten empfangenen Signals und der frequentiellen Darstellung des ersten übertragenen Signals entspricht, wobei das zweite frequentielle Signal der Differenz zwischen der frequentiellen Darstellung des zweiten empfangenen Signals und der frequentiellen Darstellung des zweiten übertragenen Signals entspricht.

3. Radarsystem (300) nach Anspruch 1, **dadurch gekennzeichnet, dass** die Rechenmittel (307) dafür konfiguriert sind, die frequentielle Größe gemäß einem Sampling-Zeitraum abzutasten, wobei die Rechenmittel (307) dafür konfiguriert sind, einen minimalen Sampling-Zeitraum in Abhängigkeit von einem maximalen Frequenzwert zu bestimmen und eine Anzahl von Abtastungen des abgetasteten Signals in Abhängigkeit von einem minimalen Frequenzwert und dem minimalen Sampling-Zeitraum zu bestimmen.

4. Radarsystem (300) nach Anspruch 1, **dadurch gekennzeichnet, dass** die Rechenmittel (307) dafür konfiguriert sind, einen Zwischenparameter in Abhängigkeit von dem Distanzmessungsgenauigkeitswert zu bestimmen, wobei der Zwischenparameter durch Teilen eines ersten Wertes durch einen zweiten Wert berechnet wird, wobei der erste Wert durch Addieren des Messungsgenauigkeitswertes zu dem Wert Zwei berechnet wird, wobei der zweite Wert durch Subtrahieren des Distanzmessungsgenauigkeitswertes von dem Wert Zwei berechnet wird, wobei die Rechenmittel (307) dafür konfiguriert sind, die Anzahl an Frequenzmessungen in Abhängigkeit von einem minimalen Frequenzwert, einem maximalen Frequenzwert und dem Zwischenparameter zu bestimmen.

5. Radarsystem (300) nach Anspruch 4, **dadurch gekennzeichnet, dass** die Rechenmittel (307) dafür konfiguriert sind, die Anzahl an Frequenzmessungen durch Teilen einer ersten logarithmischen Funktion durch eine zweite logarithmische Funktion zu bestimmen, wobei die erste logarithmische Funktion dem Neperschen Logarithmus des Verhältnisses zwischen dem maximalen Frequenzwert und dem minimalen Frequenzwert entspricht, wobei die zweite logarithmische Funktion dem Neperschen Logarithmus des Zwischenparameters entspricht.

6. Verfahren zum Bestimmen von Distanzmessungen zwischen Radar und Boden, umfassend:

- Übertragen von zwei radioelektrischen Signalen in Richtung zum Boden und Empfangen der durch Reflektion der beiden vom Boden übertragenen Signale erhaltenen Signale;
- Bestimmen von frequentiellen Darstellungen der übertragenen Signale und der empfangenen Signale;
- Bestimmen einer frequentiellen Größe in Abhängigkeit von den frequentiellen Darstellungen;

wobei das Verfahren **dadurch gekennzeichnet ist, dass** es die Schritte umfasst, die Folgendes umfassen:

- Sampling der frequentiellen Größe über eine bestimmte Anzahl von Abtastungen, wodurch ein abgetastetes Signal bereitgestellt wird;
- Bestimmen einer Anzahl von Frequenzmessungen in Abhängigkeit von einem konstanten Distanzmessungsgenauigkeitswert;
- Bestimmen von Frequenzmessungen unter Anwendung einer spektralen Zerlegung durch schnelle Fourier-Transformation auf das abgetastete Signal über die Anzahl an Messungen, wobei die Fourier-Transformation eine Dezimierung des abgetasteten Signals in einer Beziehung abhängig von dem Distanzmessungsgenauigkeitswert verwendet, und
- Bestimmen einer Distanzmessung entsprechend jeder Frequenzmessung.

**Claims**

1. Radar system (300) configured to determine radar-ground distance measurements, the radar system (300) comprising:

- transmission and reception means (301) configured to transmit two radiofrequency signals towards the ground and to receive the signals obtained by the reflection of the two transmitted signals by the ground;
- computation means (307) configured to:

  * determine the frequential representations of the transmitted signals and of the received signals;
  * determine a frequential quantity as a function of said frequential representations;

the radar system (300) being **characterized in that** the computation means (307) are configured to:

- sample said frequential quantity over a determined number of samples, which provides a sampled signal;
- determine a number of frequency measurements as a function of a constant distance measurement accuracy value;
- determine frequency measurements by applying to the sampled signal a spectral decomposition by fast Fourier transform over said number of measurements, the Fourier transform using a decimation of the sampled signal in a ratio dependent on said distance measurement accuracy value, and
- determine a distance measurement corresponding to each frequency measurement.

2. Radar system (300) according to Claim 1, **characterized in that** the transmitted signals are comprised of a first transmitted radiofrequency signal and of a second transmitted radiofrequency signal, the received signals being comprised of a first received signal and of a second received signal, the first received signal corresponding to the signal obtained by the reflection of said first transmitted signal by the ground, the second received signal corresponding to the signal obtained by the reflection of said second transmitted signal by the ground, the computation means (307) being configured to determine said frequential quantity by calculating the difference between a first frequential signal and a second frequential signal, said first frequential signal corresponding to the difference between the frequential representation of the first received signal and the frequential representation of the first transmitted signal, the second frequential signal corresponding to the difference between the frequential representation of the second received signal and the frequential representation of the second transmitted signal.

3. Radar system (300) according to Claim 1, **characterized in that** the computation means (307) are configured to sample said frequential quantity according to a sampling period, the computation means (307) being configured to determine a minimum sampling period as a function of a maximum frequency value and to determine a number of samples of the sampled signal as a function of a minimum frequency value and of said minimum sampling period.

4. Radar system (300) according to Claim 1, **characterized in that** the computation means (307) are configured to determine an intermediate parameter as a function of said distance measurement accuracy value, said intermediate parameter being calculated by dividing a first value by a second value, said first value being calculated by adding said measurement accuracy value to the value two, said second value being calculated by subtracting said distance measurement accuracy value from the value two, the computation means (307) being configured to determine said number of frequency measurements as a function of a minimum frequency value, of a maximum frequency value and of said intermediate parameter.

5. Radar system (300) according to Claim 4, **characterized in that** the computation means (307) are configured to determine the number of frequency measurements by the division of a first logarithmic function by a second logarithmic function, the first logarithmic function corresponding to the Napierian logarithm of the ratio between the maximum frequency value and the minimum frequency value, the second logarithmic function corresponding to the Napierian logarithm of said intermediate parameter.

6. Method for determining radar-ground distance measurements comprising:

    - the transmission of two radiofrequency signals towards the ground and the reception of the signals obtained by the reflection of the two transmitted signals by the ground;
    - the determination of frequential representations of the transmitted signals and of the received signals;
    - the determination of a frequential quantity as a function of said frequential representations;

the method being **characterized in that** it comprises the steps comprising:

    - the sampling of said frequential quantity over a determined number of samples, which provides a sampled signal;
    - the determination of a number of frequency measurements as a function of a constant distance measurement accuracy value;
    - the determination of frequency measurements by applying to the sampled signal a spectral decomposition by fast Fourier transform over said number of measurements, the Fourier transform using a decimation of the sampled signal in a ratio dependent on said distance measurement accuracy value, and
    - the determination of a distance measurement corresponding to each frequency measurement.

[Fig. 1]

FIG.1

[Fig. 2]

FIG.2

[Fig. 3]

300

303

$r_0(t), r_1(t)$

⊗

CAN

Moyens de calcul

Mesure de distance

301

305

307

FIG.3

[Fig. 4]

400

Emettre deux signaux $e_0(t)$ et $e_1(t)$ en direction du sol

401

Recevoir les signaux $r_0(t)$ et $r_1(t)$ correspondant à la réflexion des signaux émis par le sol

402

Déterminer les représentations en fréquence des signaux émis et signaux reçus

403

Déterminer une grandeur fréquentielle à partir des représentations en fréquence des signaux émis et signaux reçus

404

Déterminer des mesures de fréquence en effectuant un échantillonnage de la grandeur fréquentielle et en appliquant une FFT adaptée à une précision de mesure de distance constante

405

Déterminer des mesures de distance à partir des mesures de fréquences

FIG.4

[Fig. 5]

500

Entrées : une valeur minimale de fréquence $f_0$, une valeur maximale de fréquence $f_N$, une valeur de précision de mesure constante $P$, la bande de fréquence $B$ des signaux émis

501

Déterminer la période d'échantillonnage en fonction de la valeur maximale de fréquence $T_{\acute{e}ch} = \frac{1}{2 f_N}$

502

Déterminer un nombre d'échantillons $Z$ du signal échantillonné à acquérir en fonction de la période d'échantillonnage et de la valeur minimale de fréquence $Z = \left(\frac{1}{f_0}\right) / T_{\acute{e}ch}$

503

Déterminer un paramètre intermédiaire $L$ en fonction de la valeur de précision de mesure $L = \frac{1+P}{1-P}$

504

Déterminer un nombre $N$ de mesures de fréquences par FFT en fonction de la valeur minimale de fréquence, de la valeur maximale de fréquence et du paramètre intermédiaire $N = ln\left(\frac{f_N}{f_0}\right) / ln(L)$

505

Calculer $N$ mesures de fréquence FFT selon la décimation des échantillons du signal échantillonné dans un rapport dépendant de la valeur de la précision de mesure de distance

$$X_j = \sum_{m=0}^{N-1} x_m e^{-\frac{i2\pi}{N} jm} L^{(N-j)} \ avec \ j = 0, \dots, N-1$$

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2605037 A1